# EUROPÄISCHE PATENTSCHRIFT

(11) **EP 3 785 352 B1**
(45) Veröffentlichungstag und Bekanntmachung des Hinweises auf die Patenterteilung: **23.08.2023**
(21) Anmeldenummer: 19720034.8
(22) Anmeldetag: 05.04.2019
(51) Int. Cl.: H02K 5/20, H02K 9/19

(54) **ELEKTRISCHE MASCHINE**
ELECTRIC MACHINE
MACHINE ÉLECTRIQUE

(30) Priorität: 24.04.2018 DE 102018109795
(43) Veröffentlichungstag der Anmeldung: 03.03.2021
(73) Patentinhaber: Schaeffler Technologies AG & Co. KG, 91074 Herzogenaurach (DE)
(72) Erfinder: WEMLINGER, Sebastian, 77704 Oberkirch (DE); GLOMB, Simon, 76532 Baden-Baden (DE)
(86) Internationale Anmeldenummer: PCT/DE2019/100314
(87) Internationale Veröffentlichungsnummer: WO 2019/206363

(56) Entgegenhaltungen:
- DE-A1-102016 216 019
- DE-A1-102016 217 107
- DE-U1- 8 137 239
- US-A1- 2013 263 899

## Beschreibung

Die Erfindung betrifft eine elektrische Maschine mit einer Rotationsachse, einem Statorträger, wobei der Statorträger mindestens einen Kühlkanal umfasst, der in Umfangsrichtung umläuft, und ein Trennstegelement zur Unterbrechung des mindestens einen Kühlkanals, wobei das Trennstegelement am Statorträger angeordnet ist.

Üblicherweise werden Trennstegelemente bei elektrischen Maschinen eingesetzt, um einen Kühlkanal zu unterbrechen.

Diese Unterbrechung ist notwendig, um einen Zulauf und einen Ablauf, die den Kühlkanal mit einem Kühlmedium versorgen, voneinander zu trennen, sodass ein Kühlmedium nicht vom Zulauf auf kürzestem Wege zu Ablauf fließt, sondern entlang des Umfangs eine größtmögliche Strecke zurücklegt.

Somit hat das Kühlmedium ausreichend Zeit und Oberfläche, um Wärme mit der elektrischen Maschine zu tauschen.

Jedoch ist es bei den herkömmlichen Trennstegelementen bekannt, dass unterhalb des Trennstegelementes eine lokale Temperaturerhöhung vorliegt.

Diese lokale Temperaturerhöhung beeinflusst zum einen den Wirkungsgrad der gesamten elektrischen Maschine und zum anderen die Lebensdauer des Stators.

Aus jeder der DE 10 2016 216 019 A1, der DE 10 2016 217 107 A1 und der US 2013/263899 A1 ist eine elektrische Maschine gemäß dem Oberbegriff des Anspruchs 1 bekannt.

Bezüglich weiteren Standes der Technik wird auf die DE 81 37 239 U1 verwiesen.

Daher ist es Aufgabe der vorliegenden Erfindung, eine elektrische Maschine mit einem Trennstegelement anzugeben, welche kostengünstig herstellbar ist sowie eine verbesserte Temperaturverteilung und/oder eine verbesserte Wärmeableitung gewährleistet.

Diese Aufgaben werden erfindungsgemäß durch die Merkmale von Patentanspruch 1 gelöst. Weitere vorteilhafte Weiterbildungen sind Gegenstand der Unteransprüche.

Erfindungsgemäß umfasst bei einem ersten Aspekt der vorliegenden Erfindung eine elektrische Maschine:
- eine Rotationsachse,
- einen Statorträger,
- wobei der Statorträger mindestens einen Kühlkanal für ein Kühlmedium umfasst, wobei der mindestens eine Kühlkanal in Umfangsrichtung und vorzugsweise im/am Startorträger umläuft, und
- ein Trennstegelement zur Unterbrechung des mindestens einen Kühlkanals,
- wobei das Trennstegelement am Statorträger angeordnet ist.

Das Trennstegelement ist schief zur Rotationsachse orientiert. Mit anderen Worten ausgedrückt ist das Trennstegelement schräg zu dem mindestens einen Kühlkanal ausgerichtet ist. Mithilfe dieser Anordnung überstreicht das Trennstegelement einen größeren Oberflächenbereich des Statorträgers. Dadurch werden vorzugsweise auch mehrere Spulen des Stators von einem Trennstegelement kontaktiert, um Wärme zwischen den Spulen und dem Trennstegelement zu verteilen und abzuleiten. Im Ergebnis wird Wärme über eine vergrößerte Oberfläche und vorzugsweise über mehrere Spulen verteilt, sodass am Trennstegelement eine im Vergleich zum Stand der Technik geringere Wärmebelastung auftritt.

Der Statorträger weist eine erste und eine zweite Stirnseite auf.

Vorzugsweise kontaktiert das Trennstegelement die erste und/oder zweite Stirnseite. Somit kann also das Trennstegelement die beiden Stirnseiten miteinander verbinden.

Ferner ist es günstig, wenn das Trennstegelement an der ersten und/oder zweiten Stirnseite angeordnet ist.

Auch ist es von Vorteil, wenn das Trennstegelement an der äußeren Mantelfläche des Statorträgers befestigt ist. Auf diese Weise kommt das Trennstegelement mit einem oder mehreren Kühlkanälen in Kontakt, um Wärme zu tauschen.

Das Trennstegelement weist wenigstens ein Halteelement zum formschlüssigen Einrasten am Statorträger. Somit kann das Trennstegelement sicher am Statorträger angeordnet bzw. befestigt werden.

Das wenigstens eine Halteelement ist an einem ersten und/oder an einem zweiten Ende des Trennstegelements angeordnet.

Die erste und/oder zweite Stirnseite weist eine geometrisch komplementär ausgebildete Aufnahme zum wenigstens einen Halteelement des Trennstegelements auf. Auf diese Weise bilden das Trennstegelement und jeweils eine Stirnseite eine formschlüssige Verbindung, wie zum Beispiel nach Art einer Schwalbenschwanz-Verbindung.

Auch kann vorgesehen sein, dass das Trennstegelement wenigstens eine Rastnase als Halteelement zum Einrasten an einer Stirnseite des Statorträgers umfasst.

Des Weiteren ist es günstig, wenn das Trennstegelement zwei Rastnasen als Halteelemente umfasst, von denen die eine Rastnase mit der ersten Stirnseite und die andere Rastnase mit der zweiten Stirnseite verrastbar ist. Somit kann das Trennstegelement einfach und sicher am Statorträger bzw. an dessen Stirnseiten angeordnet/befestigt werden

Günstigerweise ist das Trennstegelement als allgemeiner Zylinder ausgebildet. Vorteilhafterweise ist ein allgemeiner Zylinder im mathematischen Sinne zu verstehen. D.h., dass (vereinfacht dargestellt) eine ebene Kurve C in einer Ebene E entlang einer Gerade, die nicht in der Ebene E enthalten ist, um eine feste Strecke A verschoben wird. Je zwei sich entsprechenden Punkte der ebenen Kurve C und der verschobenen Kurve D werden durch eine Strecke verbunden. Die Gesamtheit dieser parallelen Strecken bildet die zugehörige Zylinder-Fläche. Selbstverständlich sind auch andere Formen für das Trennstegelement möglich.

Auch ist es von Vorteil, wenn das Trennstegelement wenigstens eine Rastnase als Halteelement zum Einrasten an einer Stirnseite umfasst, wobei die wenigstens eine Rastnase, ausgebildet als allgemeiner Zylinder, an der Grundfläche des allgemeinen Zylinders ausgebildet ist. Somit kann ein einfaches Einrasten eines Trennstegelements am Statorträger gewährleistet werden.

Vorteilhafterweise umfasst die elektrische Maschine ein Gehäuse.

Vorzugsweise ist der Statorträger in dem Gehäuse eingelassen bzw. fest mit diesem verbunden.

Auch ist es günstig, dass am Gehäuse ein Zu- und Ablauf angeordnet ist. Somit kann ein Kühlmedium zu einem Kühlkanal und somit auch zur elektrischen Maschine hin und weg transportiert werden.

Ferner kann vorgesehen sein, dass der Statorträger eine hohlzylindrische Form umfasst.

Des Weiteren ist es bevorzugt, dass das Trennstegelement zwischen einem Zulauf und einem Ablauf für ein Kühlmedium angeordnet ist.

Günstigerweise ist das Trennstegelement dort zwischen dem Zu- und Ablauf angeordnet, wo der Abstand in Umfangsrichtung zwischen dem Zu- und Ablauf am kleinsten bzw. am geringsten ist. Auf diese Weise kann ein "Kurzschluss", bei dem das Kühlmedium auf dem kürzesten Wege vom Zulauf hin zum Ablauf fließt, unterbunden werden.

Ferner ist es möglich, dass das Trennstegelement einen Kunststoff als Material umfasst.

Vorteilhafterweise ist der Kunststoff derart verformbar ausgebildet, dass dieser den wenigstens einen Kühlkanal an einer Stelle bzw. unterhalb des Trennstegelements dichtend verschließt.

Auch ist es günstig, wenn der Kunststoff derart ausgebildet ist, dass er den auftretenden Temperaturen am Statorträger und der Temperatur des Kühlmediums standhält.

Ein zweiter Aspekt der vorliegenden Erfindung umfasst ebenfalls eine elektrische Maschine.

Es wird ausdrücklich darauf hingewiesen, dass die Merkmale der elektrischen Maschine, wie sie oben erwähnt werden, einzeln oder miteinander kombinierbar bei der elektrischen Maschine Anwendung finden können.

Anders ausgedrückt, die oben genannten Merkmale betreffend die elektrische Maschine können auch hier unter dem zweiten Aspekt der Erfindung mit weiteren Merkmalen kombiniert werden.

Vorteilhaftweise umfasst eine elektrische Maschine:
- einen Statorträger mit einer ersten und einer zweiten Stirnseite,
- wobei der Statorträger mindestens einen Kühlkanal für ein Kühlmedium umfasst, wobei der mindestens eine Kühlkanal in Umfangsrichtung umläuft,
- ein Trennstegelement zur Unterbrechung des mindestens einen Kühlkanals,
- wobei das Trennstegelement am Statorträger angeordnet ist, und
- wenigstens zwei Spulen.

Bevorzugterweise erstreckt sich das Trennstegelement über die wenigstens zwei Spulen bzw. überdeckt das Trennstegelement die wenigstens zwei Spulen. Somit kann Wärme von mehreren Spulen über eine größere Oberfläche aufgenommen und ausgetauscht werden.

Des Weiteren ist es günstig, wenn das Trennstegelement quer zu den Wicklungen der wenigstens zwei Spulen angeordnet ist, wobei die Wicklungen vorzugsweise in Richtung der Rotationsachse orientiert sind. Eben eine derartige Anordnung erleichtert den Austausch von Wärme und verhindert, dass sich ein Trennstegelement übermäßig stark erhitzt.

Nachfolgend wird der oben dargestellte Erfindungsgedanke ergänzend mit anderen Worten ausgedrückt.

Dieser Gedanke betrifft vorzugsweise - vereinfacht dargestellt - eine elektrische Maschine mit einem Trennstegelement zur Unterbrechung eines oder mehrerer Kühlkanäle in einem Statorträger.

Bekannte Lösungen aus dem Stand der Technik offenbaren für eine Kühlkanal/Trennstegelement-Anordnung nur eine Variante, nämlich eine gerade Ausrichtung des Trennstegelements zu einem Kühlkanal. Anders ausgedrückt, offenbaren Lösungen aus dem Stand der Technik lediglich eine 90° Grad Ausrichtung eines Trennstegelements zu einem Kühlkanal.

Eine derartige Anordnung ruft jedoch eine lokale Temperaturerhöhung unterhalb des Trennstegelementes hervor.

Diese lokale Temperaturerhöhung beeinflusst den Wirkungsgrad der gesamten elektrischen Maschine sowie die Lebensdauer des Stators.

Daher ist es bevorzugt, ein schräg angebrachtes Trennstegelement vorzusehen, das die Temperaturerhöhung unterhalb des Trennstegelementes auf mehrere Spulen verteilt. Mit anderen Worten dargestellt, ist es günstig, wenn das Trennstegelement schräg zu dem mindestens einen Kühlkanal ausgerichtet ist. Dadurch ist die thermische Belastung der einzelnen Spulen geringer.

Nachstehend wird die Erfindung anhand eines Ausführungsbeispiels in Verbindung mit zugehörigen Zeichnungen näher erläutert. Hierbei zeigen schematisch:
- Fig. 1: eine schematische Darstellung einer elektrischen Maschine nach dem Stand der Technik mit einem Trennstegelement;
- Fig. 2: eine schematische Darstellung einer erfindungsgemäßen elektrischen Maschine mit einem Trennstegelement; und
- Fig. 3: eine 3-dimensionale Darstellung eines Statorträgers mit einem Zulauf und einem Ablauf.

In der nachfolgenden Beschreibung werden gleiche Bezugszeichen für gleiche Gegenstände verwendet.

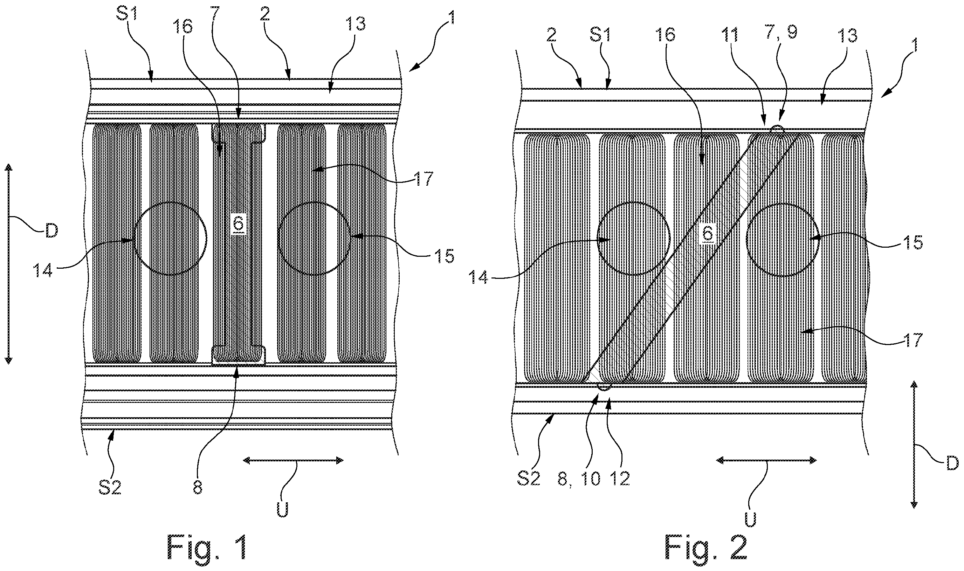

Figur 1 zeigt eine schematische Darstellung einer elektrischen Maschine 1 nach dem Stand der Technik mit einem Trennstegelement 6.

Hierbei ist zwischen einem Zulauf 14 und einem Ablauf 15 das Trennstegelement 6 angeordnet, das parallel zu den Wicklungen der dargestellten Spulen 16, 17 orientiert ist.

Bei derartigen Anordnung des Trennstegelements 6 liegt unterhalb des Trennstegelementes 6 eine lokale Temperaturerhöhung vor.

Diese lokale Temperaturerhöhung beeinflusst zum einen den Wirkungsgrad der gesamten elektrischen Maschine 1 und zum anderen die Lebensdauer des Stators.

Im Vergleich zu Figur 1 zeigt Figur 2 eine schematische Darstellung einer erfindungsgemäßen elektrischen Maschine 1 mit einem Trennstegelement 6.

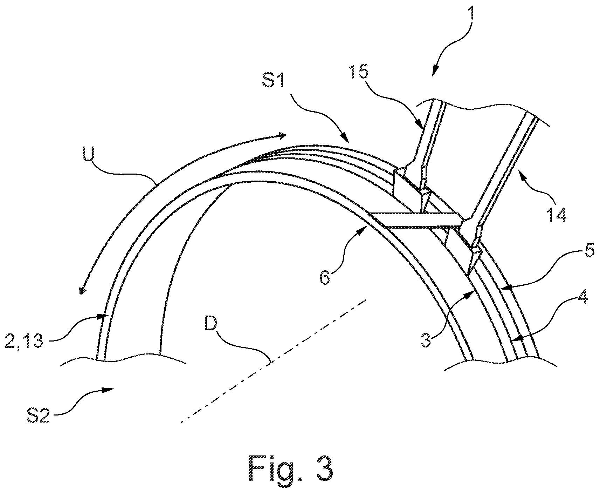

Des Weiteren zeigt Figur 3 eine 3-dimensionale Darstellung eines Statorträgers 2 mit einem Zulauf 14 und einem Ablauf 15. Sowohl der Zulauf 14 als auch der Ablauf 15 können jeweils mit Kühlkanälen 3, 4, 5 verbunden sein.

Somit kann ein Kühlmedium zu einem Kühlkanal 3, 4 ,5 und somit auch zur elektrischen Maschine 1 hin und weg transportiert werden.

Im vorliegenden Beispiel nach Figur 3 sind der Zulauf 14 und der Ablauf 15 lediglich mit einem Kühlkanal 3 verbunden. Die weiteren Kühlkanäle 4, 5 sind dargestellt, um aufzuzeigen, dass mehrere Kühlkanäle möglich sind und dass ein Kühlkanal auch in mehreren Wicklungen 3, 4, 5 um einen Statorträger 2 herumgeführt werden kann.

Der Einfachheit und Kürze halber werden nachfolgend die Figuren 2 und 3 gemeinsam beschrieben.

Genauer dargestellt zeigen Figuren 2 und 3 eine elektrische Maschine 1 mit einer Rotationsachse D, einem Statorträger 2 und einem Trennstegelement 6 zur Unterbrechung des Kühlkanals 3 bzw. der Kühlkanäle 3, 4, 5 zwischen dem Zu- 14 und Ablauf 15.

Hierbei umfasst der Statorträger 2, wie bereits erwähnt, einen Kühlkanal 3 für ein Kühlmedium, der in Umfangsrichtung U umläuft.

Das Trennstegelement 6 zur Unterbrechung des Kühlkanals 3 ist am Statorträger 2 angeordnet und 6 schief zur Rotationsachse D orientiert.

Mit anderen Worten ausgedrückt ist das Trennstegelement 6 schräg zu dem Kühlkanal 3 ausgerichtet. Mithilfe dieser Anordnung überstreicht das Trennstegelement 6 einen größeren Oberflächenbereich des Statorträgers 2. Dadurch werden auch mehrere Spulen 16, 17 des Statorträgers 2 von einem Trennstegelement 6 kontaktiert, um Wärme zwischen den Spulen 16, 17 und dem Trennstegelement 6 zu verteilen und abzuleiten. Im Ergebnis wird Wärme über eine vergrößerte Oberfläche und vorzugsweise über mehrere Spulen verteilt, sodass am Trennstegelement 6 eine im Vergleich zum Stand der Technik nach Figur 1 geringere Wärmebelastung auftritt.

Ferner zeigen Figuren 2 und 3, dass der Statorträger 2 eine erste S1 und eine zweite Stirnseite S2 aufweist, wobei das Trennstegelement 6 die erste S1 und zweite Stirnseite S2 kontaktiert.

Exakter beschrieben, ist das Trennstegelement 6 an der ersten S1 und zweiten Stirnseite S2 angeordnet bzw. an der äußeren Mantelfläche des Statorträgers 2 befestigt.

Hierbei umfasst das Trennstegelement 6 zwei Halteelemente 7, 8 zum formschlüssigen Einrasten am Statorträger 2, wobei jeweils ein Halteelement 7, 8 an einem ersten 9 und an einem zweiten Ende 10 des Trennstegelements 6 angeordnet ist.

Zwar ist es den Figuren 2 und 3 nicht genau zu entnehmen, jedoch weist die erste und zweite Stirnseite S1, S2 eine geometrisch komplementär ausgebildete Aufnahme 11, 12 zum Halteelement 7, 8 des Trennstegelements 6 auf.

Nochmals mit anderen Worten beschrieben, umfasst das Trennstegelement 6 zwei Rastnasen 7, 8 als Halteelemente, von denen die eine Rastnase 7 mit der ersten Stirnseite S1 und die andere Rastnase 8 mit der zweiten Stirnseite S2 formschlüssig verrastet ist.

Wie insbesondere Figur 2 zu entnehmen, ist das Trennstegelement 6 als allgemeiner Zylinder ausgebildet, wobei das Trennstegelement 6 - wie bereits geschildert - jeweils eine Rastnase 7, 8 als Halteelement zum Einrasten an einer Stirnseite S1, S2 umfasst.

Der Vollständigkeit halber sei noch erwähnt, dass selbstverständlich auch eine andere Form für das Trennstegelement 6 möglich ist.

In Figur 3 ist dargestellt, dass die elektrische Maschine 1 ein Gehäuse 13 umfasst, wobei der Statorträger 2 eine hohlzylindrische Form aufweist und in dem Gehäuse 13 eingelassen ist bzw. mit dem Gehäuse 13 fest verbunden ist.

Am Gehäuse 13 ist ein Zu- 14 und Ablauf 15 für ein Kühlmedium angeordnet.

Ferner ist in den Figuren 2 und 3 gezeigt, ist das Trennstegelement 6 zwischen dem Zulauf 14 und dem Ablauf 15 für ein Kühlmedium angeordnet.

Dabei ist das Trennstegelement 6 dort zwischen dem Zu- 14 und Ablauf 15 angeordnet, wo der Abstand in Umfangsrichtung U zwischen dem Zu- 14 und Ablauf 15 am kleinsten ist.

Auf diese Weise kann ein "Kurzschluss", bei dem das Kühlmedium auf dem kürzesten Wege vom Zulauf 14 hin zum Ablauf 15 fließt, unterbunden werden.

Das Trennstegelement 6 umfasst einen Kunststoff als Material, wobei der Kunststoff derart verformbar ausgebildet ist, dass dieser den Kühlkanal 3 an einer Stelle bzw. unterhalb des Trennstegelements 6 dichtend verschließt.

Figur 2 nochmals anders beschrieben, zeigt eine elektrische Maschine 1 mit einem Statorträger 2, der eine erste S1 und eine zweite Stirnseite S2 hat.

Der Statorträger 2 weist dabei einen Kühlkanal 3 (nicht dargestellt in Figur 2) für ein Kühlmedium auf, der in Umfangsrichtung U umläuft.

Des Weiteren hat die elektrische Maschine 1, wie bereits erwähnt, ein Trennstegelement 6 zur Unterbrechung des Kühlkanals 3, wobei das Trennstegelement 6 am Statorträger 2 angeordnet ist.

Ferner zeigt Figur 2, dass die elektrische Maschine 1 diverse Spulen 16, 17 hat, wobei sich das Trennstegelement 6 über die Spulen 16, 17 erstreckt bzw. diese überdeckt.

Mit anderen Worten ausgedrückt ist das Trennstegelement 6 quer zu den Wicklungen der Spulen 16, 17 angeordnet.

Nachstehend werden die Figuren 2 und 3 erneut mit anderen Worten beschrieben.

Zu zeigen genannte Figuren, ein schräg am Statorträger 2 angebrachtes Trennstegelement 6, das diagonal auf mehreren Spulen 16, 17 aufliegt.

Auf diese Weise werden die Spulen 16, 17 unterhalb des schräg angebrachten Trennstegelementes 6 besser gekühlt als mit einem senkrecht zum Strömungsfluss angebrachten Trennstegelement 6 aus dem Stand der Technik nach Figur 1.

### Bezugszeichenliste

- 1: Elektrische Maschine
- 2: Statorträger
- 3: Kühlkanal
- 4: Kühlkanal
- 5: Kühlkanal
- 6: Trennstegelement
- 7: Halteelement/Rastnase
- 8: Halteelement/Rastnase
- 9: erstes Ende
- 10: zweite Ende
- 11: Aufnahme
- 12: Aufnahme
- 13: Gehäuse
- 14: Zulauf
- 15: Ablauf
- 16: Spule
- 17: Spule

- D: Rotationsachse
- S1: erste Stirnseite
- S2: zweite Stirnseite
- U: Umfangsrichtung

## Patentansprüche

1. Elektrische Maschine (1), die aufweist:
eine Rotationsachse (D),
einen Statorträger (2), der eine erste Stirnseite (s1) und eine zweite Stirnseite (S2) und mindestens einen Kühlkanal (3, 4, 5) für ein Kühlmedium aufweist, wobei der mindestens eine Kühlkanal (3, 4, 5) in Umfangsrichtung (U) umläuft, und
ein Trennstegelement (6) zum Unterbrechen des mindestens einen Kühlkanals (3, 4, 5), wobei das Trennstegelement (6) an dem Statorträger (2) angeordnet ist und das Trennstegelement (6) schief zu der Rotationsachse (D) orientiert ist,
**dadurch gekennzeichnet, dass**
das Trennstegelement (6) wenigstens ein Halteelement (7, 8) zum formschlüssigen Einrasten an dem Statorträger (2) aufweist,
das wenigstens eine Halteelement (7, 8) an einem ersten (9) und/oder an einem zweiten Ende (10) des Trennstegelements (6) angeordnet ist, und
die erste und/oder zweite Stirnseite (S1, S2) des Statorträgers (2) eine geometrisch komplementär ausgebildete Aufnahme (11, 12) zu dem wenigstens einen Halteelement (7, 8) des Trennstegelements (6) aufweist.

2. Elektrische Maschine nach Anspruch 1, wobei das Trennstegelement (6) an der äußeren Mantelfläche des Statorträgers (2) befestigt ist.

3. Elektrische Maschine nach Anspruch 1 oder 2, wobei das wenigstens eine Halteelement eine Rastnase (7, 8) ist.

4. Elektrische Maschine nach Anspruch 3, wobei
das Trennstegelement (6) als allgemeiner Zylinder ausgebildet ist, und
die Rastnase (7, 8), ausgebildet als allgemeiner Zylinder, an der Grundfläche des allgemeinen Zylinders ausgebildet ist.

5. Elektrische Maschine nach einem der Ansprüche 1 bis 4, wobei
die elektrische Maschine (1) ein Gehäuse (13) aufweist,
der Statorträger (2) in dem Gehäuse (13) eingelassen ist,
an dem Gehäuse (13) ein Zulauf (14) und ein Ablauf (15) angeordnet ist, und
der Statorträger (2) eine hohlzylindrische Form aufweist.

6. Elektrische Maschine nach Anspruch 5, wobei
das Trennstegelement (6) zwischen dem Zulauf (14) und dem Ablauf (15) für ein Kühlmedium angeordnet ist, und
das Trennstegelement (6) dort zwischen dem Zulauf (14) und dem Ablauf (15) angeordnet ist, wo der Abstand in einer Umfangsrichtung (U) zwischen dem Zulauf (14) und dem Ablauf (15) am kleinsten ist.

7. Elektrische Maschine nach einem der Ansprüche 1 bis 6, wobei
das Trennstegelement (6) einen Kunststoff als Material aufweist, und
der Kunststoff derart verformbar ausgebildet ist, dass dieser den wenigstens einen Kühlkanal (3, 4, 5) an einer Stelle dichtend verschließt.

8. Elektrische Maschine (1) nach einem der Ansprüche 1 bis 7, wobei
die elektrische Maschine wenigstens zwei Spulen (16, 17) aufweist, und
sich das Trennstegelement (6) über die wenigstens zwei Spulen (16, 17) erstreckt.

9. Elektrische Maschine nach Anspruch 8, wobei das Trennstegelement (6) quer zu den Wicklungen der wenigstens zwei Spulen (16, 17) angeordnet ist.

## Claims

1. An electric machine (1), having:
an axis of rotation (D),
a stator carrier (2), which has a first end face (S1) and a second end face (S2) and at least one cooling channel (3, 4, 5) for a cooling medium, wherein the at least one cooling channel (3, 4, 5) runs in the circumferential direction (D), and
a separating web element (6) for interrupting the at least one cooling channel (3, 4, 5),
wherein the separating web element (6) is arranged on the stator carrier (2) and the separating web element (6) is oriented obliquely to the axis of rotation (D),
**characterised in that**
the separating web element (6) has at least one retaining element (7, 8) for positive engagement on the stator carrier (2),
the at least one retaining element (7, 8) is arranged on a first (9) and/or on a second end (10) of the separating web element (6), and
the first and/or second end face (S1, S2) of the stator carrier (2) has a recess (11, 12) of complementary geometry to the at least one retaining element (7, 8) of the separating web element (6).

2. The electric machine according to claim 1, wherein the separating web element (6) is fastened to the outer lateral surface of the stator carrier (2).

3. The electric machine according to claim 1 or 2, wherein the at least one retaining element is a detent lug (7, 8).

4. The electric machine according to claim 3, wherein
the separating web element (6) is formed as a general cylinder, and
the detent lug (7, 8) formed as a general cylinder is formed on the base of the general cylinder.

5. The electric machine according to any one of claims 1 to 4, wherein
the electric machine (1) has a housing (13),
the stator carrier (2) is embedded in the housing (13),
an inlet (14) and an outlet (15) are arranged on the housing (13), and
the stator carrier (2) has a hollow-cylindrical shape.

6. The electric machine according to claim 5, wherein
the separating web element (6) is arranged between the inlet (14) and the outlet (15) for a cooling medium, and
the separating web element (6) is arranged between the inlet (14) and the outlet (15) where the distance in a circumferential direction (U) between the inlet (14) and the outlet (15) is smallest.

7. The electric machine according to any one of claims 1 to 6, wherein
the separating web element (6) has a plastic as material, and
the plastic is designed to be deformable in such a way that it seals the at least one cooling channel (3, 4, 5) at one point.

8. The electric machine (1) according to any one of claims 1 to 7, wherein
the electric machine has at least two coils (16, 17), and
the separating web element (6) extends over the at least two coils (16, 17).

9. The electric machine according to claim 8, wherein the separating web element (6) is arranged transversely to the windings of the at least two coils (16, 17).

## Revendications

1. Machine électrique (1) comportant :
un axe de rotation (D),
un support de stator (2) qui présente une première face frontale (S1) et une seconde face frontale (S2) et au moins un conduit de refroidissement (3, 4, 5) pour un fluide de refroidissement, l'au moins un conduit de refroidissement (3, 4, 5) circulant dans la direction circonférentielle (U), et
un élément de barrette de séparation (6) pour interrompre l'au moins un canal de refroidissement (3, 4, 5), l'élément de barrette de séparation (6) étant agencé sur le support de stator (2) et l'élément de barrette de séparation (6) étant orienté obliquement par rapport à l'axe de rotation (D),
**caractérisé en ce que**
l'élément de barrette de séparation (6) présente au moins un élément de maintien (7, 8) pour un encliquetage positif sur le support de stator (2),
l'au moins un élément de maintien (7, 8) est disposé sur une première (9) et/ou une seconde extrémité (10) de l'élément de barrette de séparation (6), et
la première et/ou la seconde face frontale (S1, S2) du support de stator (2) présente un logement (11, 12) formé de manière géométriquement complémentaire à l'au moins un élément de maintien (7, 8) de l'élément de barrette de séparation (6).

2. Machine électrique selon la revendication 1, dans laquelle l'élément de barrette de séparation (6) est fixé à la surface latérale extérieure du support de stator (2).

3. Machine électrique selon la revendication 1 ou 2, dans laquelle l'au moins un élément de maintien est un taquet d'arrêt (7, 8).

4. Machine électrique selon la revendication 3, dans laquelle
l'élément de séparation (6) est formé comme un cylindre général, et
le taquet d'arrêt (7, 8) formé comme un cylindre général est formé sur la base du cylindre général.

5. Machine électrique selon l'une quelconque des revendications 1 à 4, dans laquelle
la machine électrique (1) comporte un boîtier (13),
le support de stator (2) est encastré dans le boîtier (13),
une entrée (14) et une sortie (15) sont agencées sur le boîtier (13), et
le support de stator (2) a une forme cylindrique creuse.

6. Machine électrique selon la revendication 5, dans laquelle
l'élément de barrette de séparation (6) est agencé entre l'entrée (14) et la sortie (15) pour un fluide de refroidissement, et
l'élément de barrette de séparation (6) est agencé entre l'entrée (14) et la sortie (15), là où la distance dans une direction circonférentielle (U) entre l'entrée (14) et la sortie (15) est la plus petite.

7. Machine électrique selon l'une quelconque des revendications 1 à 6, dans laquelle
l'élément de barrette de séparation (6) présente une matière plastique comme matériau, et
la matière plastique est conçue pour être déformable de façon à obturer de manière étanche l'au moins un canal de refroidissement (3, 4, 5) en un point.

8. Machine électrique (1) selon l'une quelconque des revendications 1 à 7, dans laquelle
la machine électrique comporte au moins deux bobines (16, 17), et
l'élément de barrette de séparation (6) s'étend sur les au moins deux bobines (16, 17).

9. Machine électrique selon la revendication 8, dans laquelle l'élément de barrette de séparation (6) est agencé transversalement aux bobinages des au moins deux bobines (16, 17).
